# EUROPEAN PATENT SPECIFICATION

(11) **EP 2 530 779 B1**
(45) Date of publication and mention of the grant of the patent: **14.08.2019**
(21) Application number: 11736966.0
(22) Date of filing: 25.01.2011
(51) Int. Cl.: H01M 14/00, H01L 31/04, H01G 9/20

(54) **ELECTROLYTE SOLUTION FOR DYE SENSITIZED SOLAR CELL, AND DYE SENSITIZED SOLAR CELL USING SAME**
ELEKTROLYTLÖSUNG FÜR EINE FARBSTOFFSENSIBILISIERTE SOLARZELLE UND FARBSTOFFSENSIBILISIERTE SOLARZELLE DAMIT
SOLUTION ÉLECTROLYTIQUE POUR PHOTOPILE À COLORANT ET PHOTOPILE À COLORANT L'UTILISANT

(30) Priority: 28.01.2010 JP 2010017118
(43) Date of publication of application: 05.12.2012
(73) Proprietor: Japan Carlit Co., Ltd., Chiyoda-ku, Tokyo 101-0024 (JP); Sumitomo Seika Chemicals Co., Ltd., Kako-gun, Hyogo 675-0145 (JP)
(72) Inventor: CHIBA, Kazumi, Shibukawa-shi Gunma 377-0004 (JP); YAMAGUCHI, Youji, Shibukawa-shi Gunma 377-0004 (JP); HIYAMA, Takehiro, Kako-gun Hyogo 675-0145 (JP); FUSEYA, Ichiro, Kako-gun Hyogo 675-0145 (JP); YANADA, Kazato, Shibukawa-shi Gunma 377-0004 (JP)
(74) Representative: Blodig, Wolfgang
(86) International application number: PCT/JP2011/051265
(87) International publication number: WO 2011/093253

(56) References cited:
- JP-A- 2002 241 733
- JP-A- 2004 319 131
- JP-A- 2008 171 902
- JP-A- 2009 054 283
- JP-A- 2009 054 283
- JP-A- 2010 258 333
- JP-A- 2010 272 610
- US-A1- 2009 297 954

## Description

### Technical Field

The present invention relates to an electrolyte solution for a dye sensitized solar cell, and more specifically relates to an electrolyte solution for a dye sensitized solar cell that can be used in a wide temperature range and is excellent in durability, and a dye sensitized solar cell using the same.

### Background Art

A dye sensitized solar cell having a sensitizing dye absorbing the visible light supported on a semiconductor layer has been studied in recent years. The dye sensitized solar cell has advantages that the materials used are inexpensive, and the solar cell can be produced by a relatively simple process, and thus is expected to be subjected to practical use.

The dye sensitized solar cell generally has a structure that include a metal oxide semiconductor porous film formed on a transparent substrate having a transparent conductive film, and an anode (semiconductor electrode) formed by adsorbing a sensitizing dye and a cathode (counter electrode) containing a catalyst layer formed on a conductive substrate, which are disposed to face each other on a surface of the metal oxide semiconductor porous film, with an electrolyte solution sealed between them. With incident light on the semiconductor electrode, the sensitizing dye absorbs the visible light to become an excited state, thereby injecting electron from the sensitizing dye to the semiconductor electrode, and an electric current is taken out to the outside through the collector. The oxidized form of the sensitizing dye is reduced with the redox pair in the electrolyte solution, and thus regenerated. The oxidized redox pair is then reduced with the catalyst layer on the counter electrode disposed to face the semiconductor electrode, and thus the cycle is completed.

The electrolyte solution used in a dye sensitized solar cell is thus demanded to have various characteristics. Specifically, while the dye sensitized solar cell is sealed with a sealant on the outer periphery thereof for preventing the electrolyte solution from being leaked, the cell may be broken if the electrolyte solution is decomposed and generates a gas, and the proportion of the solvent of the electrolyte solution is decreased due to the generation of a gas, which results in decrease of the conversion efficiency. Therefore, the electrolyte solution is demanded not to generate a gas even upon decomposition. Furthermore, when the electrolyte solution evaporates, the capacity of the electrolyte solution in the cell is decreased to deteriorate the conversion efficiency, as similar to the generation of the decomposition gas, and thus sufficient durability may not be obtained. In the case of an electrolyte solution having high volatility, in particular, the vapor pressure of the electrolyte solution is increased under a high temperature condition, and thus it may be difficult to seal completely the cell for maintaining the gas tightness over a prolonged period of time. Accordingly, the electrolyte solution for a dye sensitized solar cell is demanded to be difficult to evaporate and to have high stability under a high temperature condition. Moreover, for adapting to the use in cold districts or the like, the electrolyte solution is demanded to have such low temperature characteristics that the electrolyte solution does not freeze and exhibits a good conversion efficiency at a low temperature.

As an electrolyte solution for a dye sensitized solar cell, a solution formed by dissolving lithium iodide or an iodide salt and iodine in methoxyacetonitrile or acetonitrile has been ordinarily used (Patent Document 1). However, a nitrile solvent has a high vapor pressure and is liable to evaporate from the cell, which leads to a problem of failing to provide sufficient durability, although a high initial conversion efficiency is obtained (Patent Document 1).

Electrolyte solutions for a dye sensitized solar cell using propylene carbonate and γ-butyrolactone as a solvent are also disclosed (Patent Documents 2 and 3). However, these electrolyte solutions evaporate or generate a gas upon decomposition, and thus have a narrow usable temperature range, and in particular, a lactone compound has a fatal problem as a solar cell, i.e., it is decomposed with light, which provides a problem of poor durability.

Patent Document 4 describes electrolytes comprising, amongst others, sulfones having 2-4 carbons.

### Related Art Documents

### Patent Documents

Patent Document 1: JP-A-2005-347176
Patent Document 2: JP-A-2007-220608
Patent Document 3: JP-A-2000-277182
Patent Doocument 4: JP-A-2009-054283

### Summary of the Invention

### Problems to be Solved by the Invention

Under the circumstances, there has been demand for an electrolyte solution for a dye sensitized solar cell that does not generate a gas, can be used in a wide temperature range, and is excellent in durability, and an object of the invention is to provide an electrolyte solution that satisfies all the properties. Means for solving the Problems

As a result of earnest investigations made by the present inventors, it has been found that an electrolyte solution using a particular chain sulfone compound as a solvent does not freeze and exhibits a good conversion efficiency at a low temperature, and furthermore does not generate a gas or does not evaporate at a high temperature, thereby exhibiting excellent durability, and thus the invention has been completed.

The present invention relates to an electrolyte solution for a dye sensitized solar cell, containing a chain sulfone compound represented by formula (1) as a solvent: 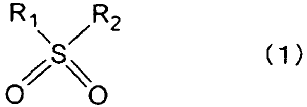 wherein R₁ and R₂ each independently represent an alkyl group having from 1 to 12 carbon atoms, provided that the total number of carbon atoms in R₁ and R₂ is five or more, which may be partially substituted by a halogen, an alkoxy group or an aromatic ring, an alkoxy group, or a phenyl group.

The invention also relates to a dye sensitized solar cell containing the electrolyte solution.

### Effects of the Invention

A dye sensitized solar cell containing the electrolyte solution of the present invention does not freeze and exhibits a good conversion efficiency at a low temperature, and does not generate a gas and does not evaporate at a high temperature, thereby providing excellent stability, and thus the dye sensitized solar cell can be used in a wide temperature range, is excellent in durability, and can maintain a good conversion efficiency for a prolonged period of time.

### Brief Description of Drawings

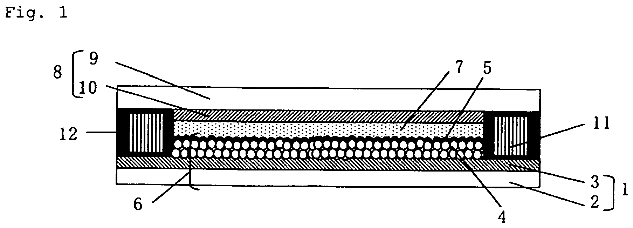

Fig. 1 is a schematic cross sectional view showing an example of a structure of a dye sensitized solar cell according to the present invention.

### Embodiments for carrying out the Invention

The electrolyte solution for a dye sensitized solar cell of the present invention contains a chain sulfone compound represented by formula (1) as a solvent. The use of the chain sulfone compound considerably enhances the durability of the solar cell.

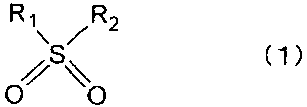

In the formula, R₁ and R₂ each independently represent an alkyl group having from 1 to 12 carbon atoms, provided that the total number of carbon atoms in R₁ and R₂ is five or more, which may be partially substituted by a halogen, an alkoxy group or an aromatic ring, an alkoxy group, or a phenyl group.

Examples of the chain sulfone compound represented by formula (1) include a compound, in which R₁ and R₂ in formula (1) each represent an alkyl group having from 1 to 12 carbon atoms, which may be partially substituted by a halogen, an alkoxy group or an aromatic ring. Specific examples thereof include ethylisopropylsulfone, ethylisobutylsulfone, isobutylisopropylsulfone, methoxyethylisopropylsulfone and fluoroethylisopropylsulfone. Among these, a compound having a total number of carbon atoms of R₁ and R₂ of 5 or more is used, and preferably from 5 to 10, such as ethylisopropylsulfone, ethylisobutylsulfone, isobutylisopropylsulfone, methoxyethylisopropylsulfone and fluoroethylisopropylsulfone, is particularly preferably used since the compound can be used in a wide temperature range and are excellent in durability.

Examples of the chain sulfone compound represented by formula (1) also include a compound, in which at least one of R₁ and R₂ is a phenyl group, and examples thereof include phenylisopropylsulfone, phenylethylsulfone and diphenylsulfone. Among these, a compound, in which one of R₁ and R₂ is a phenyl group, and the other thereof is an alkyl group having from 1 to 12 carbon atoms, which may be partially substituted by a halogen, an alkoxy group or an aromatic ring, is preferably used since the compound can be used in a wide temperature range and are excellent in durability. More preferably a compound, in which one of R₁ and R₂ is an unsubstituted alkyl group having from 1 to 5 carbon atoms, and particularly preferably phenylisopropylsulfone is used.

The electrolyte solution of the present invention may contain, in addition to the chain sulfone compound represented by formula (1), an additional solvent in such a range that the effects of the invention are not impaired. Examples of the additional solvent include a non-protonic organic solvent and an ionic liquid, and those having low viscosity and sufficient ionic conductivity are preferred. Examples of the non-protonic organic solvent include a cyclic sulfone, such as sulfolane and methylsulfolane, and an ether compound, such as ethylene glycol dialkyl ether, propylene glycol dialkyl ether, polyethylene glycol dialkyl ether and polypropylene glycol dialkyl ether. Preferred examples of the ionic liquid include those having as a cation an imidazolium series, such as 1-methyl-3-methylimidazolium, 1-butyl-3-methylimidazolium, 1-hexyl-3-methylimidazolium, 1-octyl-3-methylimidazolium, 1-methyl-2,3-dimethylimidazolium, 1-butyl-2,3-dimethylimidazolium, 1-hexyl-2,3-dimethylimidazolium or 1-octyl-2,3-dimethylimidazolium, a pyridium series, such as 1-methylpyridium, 1-butylpyridium or 1-hexylpyridium, a pyrazolium series, and an aliphatic amine series, and those having as an anion tetrafluoroborate, hexafluoroborate, a fluorinated sulfonic acid, such as trifluoromethane sulfonate, a fluorinated carboxylic acid, such as trifluoroacetic acid, a cyanate series, a thiocyanate series, a dicyanimide series, or a sulfonylimide series, such as bisfluorosulfonylimide and bistrifluoromethanesulfonylimide. These substances may be used solely or as a mixture of plural kinds thereof. The content of the additional solvent in the total solvent of the electrolyte solution of the invention is preferably 90% by mass or less, and more preferably 80% by mass or less.

The electrolyte solution of the present invention may contain a redox electrolyte, i.e., a redox pair, and the redox pair is preferably a halogen compound with a halogen ion as a counter ion, and a halogen molecule. Specific examples thereof include a combination of iodine and a iodide salt with an iodide ion as a counter ion, a combination of bromine and a bromide salt with a bromide ion as a counter ion, and mixtures thereof. A combination of iodine and an iodide salt is particularly preferred due to the high conversion efficiency thereof.

Examples of the cation constituting the halogen compound with a halogen ion as a counter ion (which may be hereinafter referred simply to a halogen compound), specifically a halogenide salt, such as an iodide salt and a bromide salt, include a metal cation, such as lithium, sodium, magnesium and calcium, and an onium cation, such as imidazolium, pyridinium, pyrrolidinium and pyrazolium, which may be used solely or as a mixture of two or more kinds thereof. Among these, an onium cation is preferably used.

In particular, an imidazolium cation represented by formula (2) is preferably contained as the cation constituting the halogen compound since it is excellent in ionic conductivity and has a high conversion efficiency:

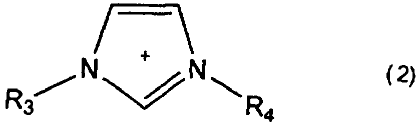

wherein R₃ and R₄ each independently represent an alkyl group or an alkoxyalkyl group, each of which has from 1 to 3 carbon atoms.

Specific examples of the imidazolium cation represented by formula (2) include 1-ethyl-3-methylimidazolium, 1-methyl-3-propylimidazolium, 1-ethyl-3-propylimidazolium, 1,3-dimethylimidazolium, 1,3-diethylimidazolium, 1,3-dipropylimidazoliumand 1-methyl-3-methoxymethylimidazolium, and the total carbon number of each of the alkyl group and the alkoxyalkyl group is more preferably from 2 to 4. It is preferred that R₃ and R₄ in formula (2) each represent an alkyl group having from 1 to 3 carbon atoms, and the total carbon number of each of the alkyl groups is from 2 to 4, and 1,3-dimethylimidazolium and 1-ethyl-3-methylimidazolium are particularly preferred since they are excellent in ionic conductivity and have a high conversion efficiency.

The reason why the compound having an imidazolium cation represented by formula (2) is preferred among imidazolium cations is not necessarily clear, but it is considered as follows. Propylene carbonate and γ-butyrolactone, particularly a nitrile solvent, which have been conventionally used, have considerably low viscosity, and there has been no difference in conductivity irrespective of the imidazolium cations used. However, the chain sulfone compound represented by formula (1) of the present invention has higher viscosity than the solvents conventionally used, and the ionic conductivity may be decreased with an imidazolium cation with a large cation size. Accordingly, in the case where the chain sulfone compound represented by formula (1) is used as a solvent, it is considered that the use of the imidazolium compound with a small cation size particularly enhances the conductivity, and an electrolyte solution exhibiting a high conversion efficiency is provided.

The halogen compound having the cation represented by formula (2) is particularly preferably an iodide salt. The optimum concentration of the halogen compound is not necessarily determined unconditionally since the generated electric current amount varies with the incident light amount upon using as a solar cell, and the concentration is preferably from 0.1 to 4.0 mol/L, and particularly preferably from 0.5 to 2.0 mol/L. When the concentration is less than 0.1 mol/L, a sufficient capability may not be obtained in some cases, and when the concentration exceeds 4.0 mol/L, it may be difficult to dissolve the compound in the solvent in some cases.

In the electrolyte solution of the present invention, a halogen molecule is used for functioning as a redox pair. Specifically, iodine (I₂) or bromine (Br₂) is preferred. In the case where a iodide salt is used as the halogen compound, iodine is preferably used as the halogen molecule. In this case, iodine molecule functions as a redox pair I⁻/I₃⁻ with the iodide salt. The optimum content of the halogen molecule in the electrolyte solution is not necessarily determined unconditionally since the generated electric current amount varies with the incident light amount upon using as a solar cell, and the content is preferably from 0.005 to 0.5 mol/L, and particularly preferably from 0.01 to 0.1 mol/L, from the standpoint of the ionic conductivity and the light energy conversion efficiency.

In the electrolyte solution of the present invention, the solvent may be gelled in such a manner that a polymer, such as polyacrylonitrile and polyvinylidene fluoride, or a low molecular weight gelling agent is added to the solvent, or a polyfunctional monomer having an ethylenic unsaturated group is polymerized in the solvent, thereby forming a gelled electrolyte as an electrolyte layer. The polymer for gelling the solvent may have ionicity, but preferably has no ionicity in the case where the polymer hinders the migration of the electrolyte.

Instead of the polymer, particles may be added to impart thixotropy, and thereby the electrolyte solution has a solid form, a paste form or a gel form upon constituting the cell. The material of the particles is not particularly limited, and a known material may be used. Examples thereof include an inorganic oxide, such as indium oxide, a mixture of tin oxide and indium oxide (which is hereinafter referred to as ITO) and silica, a carbon material, such as Ketjen black, carbon black and carbon nanotubes, and a lamellar inorganic compound, such as kaolinite and montmorillonite, i.e., a clay mineral.

The electrolyte solution of the present invention may contain, as an additive, a basic material, for example, an alkylpyridine compound, such as 4-t-butylpyridine, and an imidazole compound, such as N-methylbenzimidazole. Other optional components include, for example, a surfactant and a corrosion preventing material.

The electrolyte solution of the present invention can be obtained by adding and dissolving the halogen compound, such as the iodide salt, and the halogen molecule, such as iodine, in a solvent containing the chain sulfone compound, according to an ordinary method. The dye sensitized solar cell of the invention contains the electrolyte solution, and the other components than the electrolyte solution may have constitutions of an ordinary dye sensitized solar cell. Fig. 1 shows an example of a structure of the dye sensitized solar cell according to the invention. In Fig. 1, numeral 1 denotes an electrode substrate, 2 denotes a transparent substrate, 3 denotes a transparent conductive film, 4 denotes a porous metal oxide semiconductor layer, 5 denotes a sensitizing dye layer, 6 denotes a semiconductor electrode, 7 denotes an electrolyte layer containing the electrolyte solution of the invention, 8 denotes a counter electrode, 9 denotes an electrode substrate, 10 denotes a catalyst active layer, 11 denotes a spacer, and 12 denotes a peripheral seal portion.

The electrode substrate 1 is a transparent electrode substrate, such as conductive glass, containing the transparent substrate 2 having formed thereon the transparent conductive film 3. The porous metal oxide semiconductor layer 4 is formed on the transparent conductive film 3, and the sensitizing dye layer 5 is formed by adsorbing the dye on the surface of the metal oxide semiconductor. The semiconductor electrode 6 as an anode is formed of these components.

### Transparent Substrate

The transparent substrate 2 constituting the electrode substrate 1 may be a material that transmits visible light, and transparent glass may be preferably used. Glass having a surface finishing that scatters the incident light, and translucent frosted glass may also be used. Instead of glass, a plastic plate, a plastic film and the like that transmit light may also be used.

The thickness of the transparent substrate 2 is not particularly limited since it varies depending on the shape and the use condition of the solar cell, and in the case where glass, plastics or the like is used, for example, the thickness may be approximately from 1 mm to 1 cm in consideration of the durability upon use, and in the case where a plastic film or the like is used for achieving the necessary flexibility, the thickness may be approximately from 25 µm to 1 mm. A treatment, such as a hard coat treatment, for enhancing the weather resistance may be used depending on necessity.

### Transparent Conductive Film

The transparent conductive film 3 may be a material that transmits visible light and has conductivity. Examples of the material include a metal oxide. While not limited, tin oxide doped with fluorine (which is hereinafter abbreviated as FTO), indium oxide, ITO, tin oxide doped with antimony (which is hereinafter abbreviated as ATO), zinc oxide and the like may be preferably used.

An opaque conductive material may be used when the material transmits visible light through such a treatment as dispersing the material. Examples of the material include a carbon material and a metal. Examples of the carbon material include graphite, carbon black, glassy carbon, carbon nanotubes and fullerene while not particularly limited. Examples of the metal include platinum, gold, silver, copper, aluminum, nickel, cobalt, chromium, iron, molybdenum, titanium and alloys thereof while not particularly limited.

In the case where a halogen molecule and a halogen compound, more specifically iodine and an iodide salt, or bromine and a bromide salt, are used as the redox pair contained in the electrolyte solution, the conductive material used in the transparent conductive film preferably has high corrosion resistance to the electrolyte solution. Accordingly, among metal oxides, FTO and ITO are particularly preferred.

The transparent conductive film 3 may be formed by providing a material containing at least one kind selected from the aforementioned conductive materials, on the surface of the transparent substrate 1. Alternatively, the conductive material may be incorporated in the material constituting the transparent substrate 2, thereby integrating the transparent substrate and the transparent conductive film to make the electrode substrate 1.

As a method of forming the transparent conductive film 3 on the transparent substrate 2, a sol-gel method, a gas phase method, such as sputtering and CVD, coating a dispersed paste, and the like may be used for forming a metal oxide. In the case where an opaque conductive material is used, such a method or the like may be used that powder or the like thereof is fixed along with a transparent binder or the like.

For integrating the transparent substrate and the transparent conductive film, such a method may be used that the conductive film material is mixed as a conductive filler upon forming the transparent substrate.

The thickness of the transparent conductive film 3 is not particularly limited since the conductivity varies depending on the material used, and may be from 0.01 to 5 µm, and preferably from 0.1 to 1 µm, for glass with an FTO film, which is generally used. The necessary conductivity varies depending on the area of the electrode used and is demanded to have lower resistance for an electrode with a larger area, and the conductivity is generally 100 Ω per square or less, preferably 10 Ω per square or less, and more preferably 5 Ω per square or less. The conductivity exceeding 100 Ω per square is not preferred since the internal resistance of the solar cell is increased.

The thickness of the electrode substrate 1 constituted by the transparent substrate and the transparent conductive film or the electrode substrate 1 formed by integrating the transparent substrate and the transparent conductive film is not particularly limited since it varies depending on the shape and the use condition of the solar cell, as described above, and the thickness is generally approximately from 1 µm to 1 cm.

### Porous Metal Oxide Semiconductor

The metal oxide semiconductor forming the porous metal oxide semiconductor layer 4 may be a known ordinary one. Examples thereof include an oxide of a transition metal, such as Ti, Nb, Zn, Sn, Zr, Y, La and Ta, and a perovskite oxide, such as SrTiO₂ and CaTiO₃. While not limited, examples thereof include titanium oxide, zinc oxide and tin oxide, and in particular, titanium dioxide and anatase-type titanium dioxide are preferred.

The porous metal oxide semiconductor layer 4 may be provided on the transparent conductive film 3 by using the metal oxide semiconductor according to a known method without particular limitation. Examples of the method used include a sol-gel method, coating of a dispersed paste, and electrocrystallization or electrodeposition. Furthermore, for decreasing the electric resistance, the amount of the grain boundary of the metal oxide is preferably small, and the coated metal oxide is preferably sintered. The sintering condition may be appropriately changed since it varies depending on the kind and the formation method of the metal oxide semiconductor and the allowable temperature of the substrate, and in the case where titanium dioxide is used, it is preferably sintered at 450 to 550°C.

For adsorbing a larger amount of the sensitizing dye, the semiconductor layer 4 is preferably porous, and specifically, preferably has a specific surface area of from 10 to 200 m²/g. For enhancing the light absorption amount of the sensitizing dye, the particle diameter of the metal oxide used is preferably dispersed for scattering light. The thickness of the semiconductor layer 4 is not particularly limited since the optimum value thereof varies depending on the metal oxide used and the properties thereof, and may be from 0.1 to 50 µm, and preferably from 5 to 30 µm.

### Sensitizing Dye

The sensitizing dye constituting the sensitizing dye layer 5 may be any one that can be excited by the sunlight to perform electron injection to the metal oxide semiconductor layer 4 and may be a dye that is ordinarily used in a dye sensitized solar cell. For enhancing the conversion efficiency, the sensitizing dye preferably has an absorption spectrum that overlaps the sunlight spectrum over a wide wavelength range and preferably has high light fastness.

While not limited, the sensitizing dye is preferably a ruthenium complex, particularly a ruthenium polypyridine complex, and further preferably a ruthenium complex represented by Ru(L) (L') (X)₂. Herein, L represents a polypyridine ligand having 4,4'-dicarboxy-2,2'-bipyridine or a quaternary ammonium salt thereof and a carboxyl group introduced therein, L' represents the same ligand as L or a 4,4'-substituted 2,2'-bipyridine, in which examples of the substituent on the 4 and 4'-positions of L' include a long-chain alkyl group, an alkyl-substituted vinylthienyl group, an alkyl- or alkoxy-substituted styryl group, and a thienyl group derivative. X represents SCN, Cl or CN. Examples of the complex include bis(4,4'-dicarboxy-2,2'-bipyridine)diisothiocyanate ruthenium complex.

Other examples of the dye include a metal complex dye other than ruthenium, such as an iron complex and a copper complex. Examples thereof also include an organic dye, such as a cyan dye, a porphyrin dye, a polyene dye, a coumarin dye, a cyanine dye, a squalirium dye, a styryl dye and an eosin dye, and specific examples thereof include a dye produced by Mitsubishi Paper Mills Limited (trade name: D149 Dye). The dye preferably has a bonding group to the metal oxide semiconductor layer 4 for enhancing the electron injection efficiency to the metal oxide semiconductor layer 4. The bonding group is not particularly limited, and is preferably a carboxyl group, a sulfonyl group or the like.

The method for adsorbing the sensitizing dye to the porous metal oxide semiconductor layer 4 is not particularly limited, and examples thereof include a method of immersing the metal oxide semiconductor layer 4 formed on the transparent conductive film 2 in a solution having the dye dissolved therein at room temperature under the atmospheric pressure. The immersing time is preferably controlled to form a monomolecular film of the dye uniformly on the semiconductor layer 4, in consideration of the kinds of the semiconductor, the dye and the solvent used, and the concentration of the dye. For performing the adsorption efficiently, the immersion may be performed under heating.

The sensitizing dye is preferably not associated on the surface of the porous metal oxide semiconductor layer 4. In the case where the association occurs when the dye is adsorbed solely, a co-adsorbent may be adsorbed depending on necessity. The adsorbent is not particularly limited since the optimum kind and concentration vary depending on the dye used, and examples thereof include an organic carboxylic acid, such as deoxycholic acid. The method for adsorbing the co-adsorbent is not particularly limited, and the co-adsorbent may be dissolved along with the sensitizing dye in the solvent for dissolving the sensitizing dye, in which the metal oxide semiconductor layer 4 is then immersed, thereby adsorbing the co-adsorbent simultaneously with the adsorbing step of the dye.

Examples of the solvent used for dissolving the sensitizing dye include an alcohol compound, such as ethanol, a nitrogen compound, such as acetonitrile, a ketone compound, such as acetone, an ether compound, such as diethyl ether, a halogenated aliphatic hydrocarbon, such as chloroform, an aliphatic hydrocarbon, such as hexane, an aromatic hydrocarbon, such as benzene, and an ester compound, such as ethyl acetate. The dye concentration in the solution is preferably controlled depending on the kinds of the dye and the solvent used. For example, the concentration may be preferably 5 × 10⁻⁵ mol/L or more.

### Counter Electrode

The counter electrode 8 as a cathode is disposed to face the semiconductor electrode 6 constituted by the electrode substrate 1, the porous metal oxide semiconductor layer 4 and the sensitizing dye layer 5, with the electrolyte layer 7 and the spacer 11 intervening between them.

### Counter Electrode - Substrate

The substrate 9 of the counter electrode preferably has a high conductivity for decreasing the internal resistance of the solar cell. In the case where a halogen molecule and a halogen compound are used as the redox pair in the electrolyte, as described above, a material having high corrosion resistance to the electrolyte solution is preferably used as the conductive electrode substrate 9.

Examples of the material of the conductive substrate 9 specifically include chromium, nickel, titanium, tantalum, niobium and stainless steel, which is an alloy thereof, which form an oxide film on the surface thereof to provide good corrosion resistance, and aluminum having enhanced corrosion resistance by forming an oxide film on the surface thereof.

Preferred examples of the material also include a conductive metal oxide. While not limited, ITO, FTO, ATO, zinc oxide, titanium oxide and the like may be preferably used. In particular FTO and ITO are preferably used.

The conductive electrode substrate 9 may have a support for enhancing the durability and the handleability. For example, glass and a transparent plastic resin plate may be used when transparency is demanded. A plastic resin plate may be used when lightweight property is demanded, and a plastic resin film or the like may be used when flexibility is demanded. A metal plate or the like may be used for enhancing the strength.

The method of disposing the support is not particularly limited, and since the catalyst active layer 10 as a functional portion of the counter electrode is formed on the surface of the conductive electrode substrate 9, the support is preferably disposed on the portion where the catalyst active layer 10 is not supported, particularly on the back surface of the electrode substrate 9. The conductive electrode substrate and the support may be integrated in such a manner that powder or filler of a conductive material is supported on the surface of the support by embedding or the like method.

The thickness of the support is not particularly limited since it varies depending on the shape and the use condition of the counter electrode, and in the case where glass, plastics or the like is used, for example, the thickness may be approximately from 1 mm to 1 cm in consideration of durability on practical use, and may be approximately from 25 µm to 1 mm when a plastic film or the like is used upon necessity of flexibility. A treatment, such as a hard coat treatment or attachment of a film, for enhancing the weather resistance may be used depending on necessity. In the case where a metal material is used as the support, the thickness thereof may be approximately from 10 µm to 1 cm.

The configuration and the thickness of the conductive electrode substrate 9 are not particularly limited since the conductivity varies depending on the shape and the use condition upon using as the electrode, and on the material used, and an arbitrary configuration may be used. For example, in the case where the practical strength is ensured by using the support, the thickness may be approximately 100 nm when the necessary conductivity as the electrode is ensured. In the case where the strength is ensured only with the conductive electrode substrate 9 without the use of the support, the thickness is preferably approximately 1 mm or more.

The necessary conductivity varies depending on the area of the electrode used, i.e., a lower resistance is demanded for the electrode having a larger area, and is generally 100 Ω per square or less, preferably 5 Ω per square or less, and more preferably 1 Ω per square or less. The conductivity exceeding 100 Ω per square is not preferred since the internal resistance of the solar cell is increased.

### Catalyst Active Layer

The catalyst material supported on the surface of the conductive electrode substrate 9 only needs to have a capability of reducing the halogen compound or the like contained as the redox pair in the electrolyte layer 7 from the oxidized form to the reduced form at a sufficient rate, and specifically is not particularly limited as far as, for example, a triiodide anion (I₃⁻) can be reduced to an iodide anion (I⁻), or a tribromide anion (Br₃⁻) can be reduced to a bromide anion (Br⁻), and a known material may be used therefor. Preferred examples include a transition metal, a conductive polymer material and a carbon material.

The shape thereof is not particularly limited since it varies depending on the kind of the catalyst used. A catalyst material containing at least one of the aforementioned catalyst materials may be disposed on the surface of the electrode substrate 9, thereby forming the catalyst active layer 10. In alternative, the catalyst material may be incorporated into the material constituting the electrode substrate 9.

Preferred examples of the transition metal as the catalyst used include platinum, palladium, ruthenium and rhodium, and an alloy thereof may also be used. Among these, platinum and a platinum alloy are preferred. The transition metal may be supported on the conductive substrate 9 by a known method. For example, the transition metal may be supported on the conductive substrate 9 by a direct forming method, such as sputtering, vapor deposition and electrodeposition, a method of thermally decomposing a precursor, such as chloroplatinic acid, and the like, thereby forming the catalyst active layer 10.

A conductive polymer may be used as the catalyst that is formed by polymerizing at least one monomer selected from pyrrole, aniline, thiophene and derivatives thereof as a monomer for the conductive polymer. In particular, polyaniline and poly(ethylenedioxythiophene) are preferred. The conductive polymer may be supported on the electrode substrate 9 by a known method. Examples thereof include a method of immersing the conductive substrate 9 in a solution containing the monomer, and electrochemically polymerizing the monomer, a chemical polymerization method of reacting a solution containing an oxidizing agent, such as Fe (III) ion and ammonium persulfate, and the monomer on the electrode substrate 9, a method of forming a film from the conductive polymer in a molten state or a solution of the conductive polymer dissolved therein, and a method of forming a paste or an emulsion of particles of the conductive polymer or forming a mixture of the polymer solution and a binder, and coating the same on the electrode substrate 9 by screen printing, spray coating, brush coating or the like.

The carbon material is not particularly limited, and a known carbon material that has a catalytic function of reducing a triiodide anion (I₃⁻) as an oxidized form of the redox pair may be used. Particularly, carbon nanotubes, carbon black, activated carbon and the like are preferred. The carbon material may be supported on the conductive substrate 9 by using a known method, such as a method of coating and drying a paste containing a fluorine binder and the like.

The spacer 11 is disposed between the semiconductor electrode 6 and the counter electrode 8, and the space formed thereby is filled with the electrolyte solution to form the electrolyte layer 7, which is sealed with the peripheral seal portion 12.

### Spacer

The spacer 11 controls and fixes the interelectrode distance to prevent the semiconductor electrode and the counter electrode from shorting through contact with each other, and a known material in an arbitrary shape may be used without particular limitation as far as the material is not deteriorated by the electrolyte solution, heat and light. Examples of the material include a glass or ceramic material, a fluorine resin, a photo-curable resin and a thermosetting resin. A minute glass or ceramic material may be mixed in the peripheral seal portion 12, and thereby the peripheral seal portion may also function as the spacer.

### Peripheral Seal Portion

The peripheral seal portion 12 seals the electrolyte solution of the present invention from being leaked by adhering the semiconductor electrode and counter electrode, and is not particularly limited as far as the material therefor is not deteriorated by the electrolyte solution, heat and light. Examples thereof include a thermoplastic resin, a thermosetting resin, an ultraviolet ray-curable resin, an electron beam-curable resin, a metal and rubber.

### Example

The present invention will be described specifically with reference to examples and comparative examples below, but these do not limit the invention.

### Example 1

An electrolyte solution was prepared, and a dye sensitized solar cell was produced, in the following manners.

### Preparation of Electrolyte Solution

1-Ethyl-3-methylimidazolium iodide at a ratio of 0.6 mol/L, 4-tert-butylpyridine at a ratio of 0.5 mol/L, lithium iodide at a ratio of 0.1 mol/L and iodine at a ratio of 0.05 mol/L were dissolved in ethylisopropylsulfone (produced by Sumitomo Seika Chemicals Co., Ltd.), thereby preparing an electrolyte solution.

### Formation of Porous Metal Oxide Semiconductor Layer

FTO glass (produced by Nippon Sheet Glass Co., Ltd., 25 mm × 50 mm) was used as a transparent substrate with a transparent conductive film, and the surface thereof was coated with a titanium oxide paste (Titania Paste PST-18NR, produced by JGC Catalysts and Chemicals Ltd.) by repeating three times a printing step by screen printing and drying step at 90°C for 30 minutes, and then baked in the atmosphere at 500°C for 60 minutes, thereby forming a porous titanium oxide layer having a thickness of approximately 15 µm. The porous titanium oxide layer was further coated with a titanium oxide paste (Titania Paste PST-400C, produced by JGC Catalysts and Chemicals Ltd.) by screen printing, and then similarly baked, thereby completing a porous metal oxide semiconductor layer having a thickness of approximately 20 µm for use as the porous titanium oxide semiconductor electrode.

### Adsorption of Sensitizing Dye

A bis(4,4'-dicarboxy-2,2'-bipyridine)diisothiocyanate ruthenium complex (produced by Solaronix S.A.) generally referred to as N3dye was used as the sensitizing dye. The porous titanium oxide semiconductor electrode having been heated to 80°C was immersed in an acetonitrile-t-butyl alcohol (1/1) mixed solution having a dye concentration of 0.5 mmol/L under slowly shaking with shielding from light for 48 hours. Thereafter, the electrode was rinsed with dehydrated acetonitrile for removing the excessive dye, followed by air drying, thereby completing the photoelectrode (anode) of the solar cell.

### Counter Electrode

As a counter electrode, a platinum counter electrode (produced by Geomatec Co., Ltd.) was used, which was produced in such a manner that Ti was formed into a film (thickness: 50 nm) as an anchor layer on a glass substrate by a sputtering method, and then Pt was formed into a film (thickness: 150 nm) on the Ti layer by a sputtering method.

### Assembly of Solar Cell

The photoelectrode and the counter electrode having two electrolyte solution charging holes having a diameter of 0.6 mm provided with an electric drill, which were produced as above, were disposed to face each other, and an FEP resin sheet having a thickness of 50 µm as a spacer and a thermoplastic sheet (Bynel, produced by Du Pont, thickness: 50 µm) on the outer periphery of the spacer were disposed between the electrodes while preventing them overlapping each other, followed by adhering the electrodes by pressing under heat. The electrolyte solution thus produced above was then charged between the electrodes through the electrolyte solution charging holes by capillarity, and a glass plate having a thickness of 1 mm was placed on the electrolyte solution charging holes with a thermoplastic sheet intervening between them, which were again pressed under heat for sealing, thereby producing a solar cell.

### Example 2

A solar cell was produced in the same manner as in Example 1 except that the electrolyte solution was prepared by using ethylisobutylsulfone (produced by Sumitomo Seika Chemicals Co., Ltd.), instead of ethylisopropylsulfone.

### Example 3

A solar cell was produced in the same manner as in Example 1 except that the electrolyte solution was prepared by using isopropylisobutylsulfone (produced by Sumitomo Seika Chemicals Co., Ltd.), instead of ethylisopropylsulfone.

### Example 4

### Preparation of Methoxyethylisopropylsulfone

Methoxyethylisopropylsulfone was obtained in such a manner that methoxyethyl bromide and sodium hydrogensulfide were reacted to provide methoxyethylmercaptan, which was purified by distillation and then reacted with metallic sodium to convert to sodium methoxyethanethiolate, which was reacted with isopropyl iodide and then oxidized with an oxidizing agent, and the oxide was purified by distillation.

### Production of Solar Cell

A solar cell was produced in the same manner as in Example 1 except that the electrolyte solution was prepared by using methoxyethylisopropylsulfone thus obtained, instead of ethylisopropylsulfone.

### Example 5

### Preparation of Phenylisopropylsulfone

Phenylisopropylsulfone was obtained in such a manner that phenylmercaptan was reacted with metallic sodium to provide sodium thiophenoxide, which was reacted with isopropyl iodide and then oxidized with an oxidizing agent, and the oxide was purified by distillation.

### Production of Solar Cell

A solar cell was produced in the same manner as in Example 1 except that the electrolyte solution was prepared by using phenylisopropylsulfone thus obtained, instead of ethylisopropylsulfone.

### Example 6

### Preparation of Fluoroethylisopropylsulfone

Fluoroethylisopropylsulfone was obtained in such a manner that ethylmercaptan was reacted with fluorine gas and then purified by distillation to provide fluorinated ethylmercaptan, which was reacted with metallic sodium to provide sodium fluorinated ethanethiolate, which was reacted with isopropyl iodide and then oxidized with an oxidizing agent, and the oxide was purified by distillation.

### Production of Solar Cell

A solar cell was produced in the same manner as in Example 1 except that the electrolyte solution was prepared by using fluoroethylisopropylsulfone thus obtained, instead of ethylisopropylsulfone.

### Example 7

A solar cell was produced in the same manner as in Example 1 except that the electrolyte solution was prepared by using 1,3-dimethylimidazolium iodide, instead of 1-ethyl-3-methylimidazolium iodide.

### Example 8

A solar cell was produced in the same manner as in Example 1 except that the electrolyte solution was prepared by using 1-methyl-3-propylimidazolium iodide, instead of 1-ethyl-3-methylimidazolium iodide.

### Example 9

A solar cell was produced in the same manner as in Example 1 except that the electrolyte solution was prepared by using 1-methyl-3-methoxymethylimidazolium iodide, instead of 1-ethyl-3-methylimidazolium iodide.

### Example 10

A solar cell was produced in the same manner as in Example 1 except that the electrolyte solution was prepared by using 1-ethyl-3-propylimidazolium iodide, instead of 1-ethyl-3-methylimidazolium iodide.

### Example 11

A solar cell was produced in the same manner as in Example 1 except that the electrolyte solution was prepared by using 1-methyl-3-butylimidazolium iodide, instead of 1-ethyl-3-methylimidazolium iodide.

### Example 12

A solar cell was produced in the same manner as in Example 1 except that the electrolyte solution was prepared by using 1-hexyl-3-methylimidazolium iodide, instead of 1-ethyl-3-methylimidazolium iodide.

### Example 13

A solar cell was produced in the same manner as in Example 1 except that the electrolyte solution was prepared by using 1-methyl-3-methoxyhexylimidazolium iodide, instead of 1-ethyl-3-methylimidazolium iodide.

### Comparative Example 1

A solar cell was produced in the same manner as in Example 1 except that the electrolyte solution was prepared by using ethylene glycol dimethyl ether, instead of ethylisopropylsulfone.

### Comparative Example 2

A solar cell was produced in the same manner as in Example 1 except that the electrolyte solution was prepared by using N,N-dimethylformamide, instead of ethylisopropylsulfone.

### Comparative Example 3

A solar cell was produced in the same manner as in Example 1 except that the electrolyte solution was prepared by using γ-butyrolactone, instead of ethylisopropylsulfone.

### Comparative Example 4

A solar cell was produced in the same manner as in Example 1 except that the electrolyte solution was prepared by using propylene carbonate, instead of ethylisopropylsulfone.

### Comparative Example 5

A solar cell was produced in the same manner as in Example 1 except that the electrolyte solution was prepared by using dimethylsulfoxide, instead of ethylisopropylsulfone.

### Comparative Example 6

A solar cell was produced in the same manner as in Example 1 except that the electrolyte solution was prepared by using sulfolane, instead of ethylisopropylsulfone.

### Comparative Example 7

A solar cell was produced in the same manner as in Example 1 except that the electrolyte solution was prepared by using acetonitrile, instead of ethylisopropylsulfone.

### Comparative Example 8

A solar cell was produced in the same manner as in Example 1 except that the electrolyte solution was prepared by using methoxypropionitrile, instead of ethylisopropylsulfone.

### Comparative Example 9

A solar cell was produced in the same manner as in Example 1 except that the electrolyte solution was prepared by using 1,3-dimethylimidazolium iodide, instead of 1-ethyl-3-methylimidazolium iodide, and using acetonitrile, instead of ethylisopropylsulfone.

### Comparative Example 10

A solar cell was produced in the same manner as in Example 1 except that the electrolyte solution was prepared by using 1-methyl-3-propylimidazolium iodide, instead of 1-ethyl-3-methylimidazolium iodide, and using acetonitrile, instead of ethylisopropylsulfone.

### Comparative Example 11

A solar cell was produced in the same manner as in Example 1 except that the electrolyte solution was prepared by using 1-hexyl-3-methylimidazolium iodide, instead of 1-ethyl-3-methylimidazolium iodide, and using acetonitrile, instead of ethylisopropylsulfone.

### Test Example 1

### Measurement of Photoelectric Conversion Characteristics of Solar Cell

The dye sensitized solar cells produced in Examples 1 to 6 and Comparative Examples 1 to 8 were provided with a mask for limiting light irradiation area having a 5 mm-square window, and evaluated for open circuit voltage (which is hereinafter abbreviated as Voc), short circuit current density (which is hereinafter abbreviated as Jsc), form factor (which is hereinafter abbreviated as FF) and photoelectric conversion efficiency at -25°C and 25°C by using a direct voltage and current generator, produced by ADC Corporation, under irradiation with simulated sunlight with a solar simulator, produced by Bunkoukeiki Co., Ltd., while controlling the irradiation intensity of the light source to a light amount of 100 mW/cm² and AM 1.5. With respect to the measured values of Voc, Jsc, FF and photoelectric conversion efficiency, a larger value is preferred for the capability of the solar cell.

Thereafter, the solar cells were irradiated with light having an irradiation intensity of 100 mW/cm² for 1,000 hours under a condition of 85°C and 85%RH, and were measured for photoelectric conversion efficiency at 25°C immediately after the start of irradiation and after 1,000 hours.

The electrolyte solution was visually observed during the measurement, and the occurrence of gas generation was determined. The results are shown in Table 1 below. With respect to the occurrence of gas generation, the case without gas generation is indicated by A, and the case with gas generation is indicated by B. The results are shown in Table 1.

**Table 1**

| | Initial conversion efficiency (%) | | Conversion efficiency after test (%) | Gas generation |
|---|---|---|---|---|
| | -25°C | 25°C | | |
| Example 1 | 5.4 | 7.8 | 7.6 | A |
| Example 2 | 5.9 | 7.9 | 7.6 | A |
| Example 3 | 6.3 | 7.6 | 7.5 | A |
| Example 4 | 6.7 | 7.7 | 7.6 | A |
| Example 5 | 6.5 | 7.8 | 7.6 | A |
| Example 6 | 6.0 | 7.8 | 7.5 | A |
| Comparative Example 1 | 5.6 | 6.5 | < 0.1 | A |
| Comparative Example 2 | 5.5 | 6.6 | 1.9 | A |
| Comparative Example 3 | 6.9 | 7.6 | 3.7 | A |
| Comparative Example 4 | 6.9 | 7.8 | 3.2 | B |
| Comparative Example 5 | 2.1 | 7.7 | 3.4 | A |
| Comparative Example 6 | < 0.1 | 7.6 | 7.3 | A |
| Comparative Example 7 | 5.4 | 8.5 | 1.4 | A |
| Comparative Example 8 | 3.3 | 7.5 | 4.1 | A |

It was shown that the electrolyte solutions of Examples 1 to 6 suffered no gas generation, and the use thereof in a dye sensitized solar cell provided high durability imparted thereto. It was also shown that the electrolyte solutions did not freeze and provided a good conversion efficiency at a low temperature, and thus the dye sensitized solar cells using the electrolyte solutions were able to be used in a wide temperature range. On the other hand, the dye sensitized solar cells using the electrolyte solutions of Comparative Examples 1 to 5, 7 and 8 showed poor durability, and Comparative Example 6 provided a considerably low conversion efficiency at a low temperature.

### Test Example 2

### Measurement of Photoelectric Conversion Characteristics of Solar Cell

The dye sensitized solar cells produced in Examples 1 and 7 to 13 and Comparative Examples 7 and 9 to 11 were measured for initial conversion efficiency and conversion efficiency after irradiation of light for 1, 000 hours, at 25°C in the same manner as in Test Example 1. The results are shown in Table 2.

**Table 2**

| | Iodide salt | Solvent | Initial conversion efficiency (%) | Conversion efficiency after test (%) |
|---|---|---|---|---|
| Example 1 | 1-ethyl-3-methylimidazolium iodide | ethyl-isopropyl sulfone | 7.8 | 7.6 |
| Example 7 | 1,3-dimethylimidazolium iodide | | 7.8 | 7.8 |
| Example 8 | 1-methyl-3-propyl-imidazolium iodide | | 7.4 | 7.3 |
| Example 9 | 1-methyl-3-methoxy-methyl imidazolium iodide | | 7.3 | 7.2 |
| Example 10 | 1-ethyl-3-propyl-iodide | | 6.8 | 6.7 |
| Example 11 | 1-methyl-3-butyl-imidazolium iodide | | 6.6 | 6.5 |
| Example 12 | 1-hexyl-3-methylimidazolium iodide | | 5.8 | 5.3 |
| Example 13 | 1-methyl-3-methoxy-hexyl imidazolium iodide | | 5.5 | 5.0 |
| Comparative Example 7 | 1-ethyl-3-methylimidazolium iodide | acetonitrile | 8.5 | 1.4 |
| Comparative Example 9 | 1,3-dimethylimidazolium iodide | | 8.5 | 1.3 |
| Comparative Example 10 | 1-methyl-3-propyl-imidazolium iodide | | 8.4 | 1.5 |
| Comparative Example 11 | 1-hexyl-3-methylimidazolium iodide | | 8.4 | 1.4 |

It was shown that in Examples 1 and 7 to 11, the use of the electrolyte solution containing the chain sulfone of the present invention as a solvent and the imidazolium iodide having an alkyl group or an alkoxyalkyl group, each of which has from 1 to 3 carbon atoms, as substituents, in a dye sensitized solar cell provided a high conversion efficiency and high durability, and particularly, the use of the imidazolium iodide having a total carbon number of the alkyl group and the alkoxyalkyl group of from 2 to 4 provided a considerably high conversion efficiency.

On the other hand, the electrolyte solutions of Comparative Examples 7 and 9 to 11 using acetonitrile having been conventionally used as a solvent, instead of the chain sulfone solvents showed a high initial conversion efficiency but were not able to be subjected to practical use due to the considerably low durability thereof. Furthermore, it was also shown that in the case using acetonitrile as a solvent, the initial conversion efficiency was not changed depending on the carbon number of the alkyl group of the imidazolium cation, but equal conversion efficiency was provided in all the imidazolium cations, i.e., there was no dependency of the imidazolium cation on the carbon number of the substituent, whereas in the case using the chain sulfone of the invention as a solvent, there was a dependency of the imidazolium cation on the carbon number of the substituent.

### Industrial Applicability

The electrolyte solution of the present invention is excellent in low temperature characteristics and does not generate a gas and does not evaporate in a high temperature condition or under irradiation of light to provide high stability, and thus is favorably used as an electrolyte solution of a dye sensitized solar cell.

### Description of Symbols

- 1: electrode substrate
- 2: transparent substrate
- 3: transparent conductive film
- 4: porous metal oxide semiconductor layer
- 5: sensitizing dye layer
- 6: semiconductor electrode
- 7: electrolyte layer
- 8: counter electrode
- 9: electrode substrate
- 10: catalyst active layer
- 11: spacer
- 12: peripheral seal portion

## Claims

1. An electrolyte solution for a dye sensitized solar cell, comprising a chain sulfone compound represented by formula (1) as a solvent: 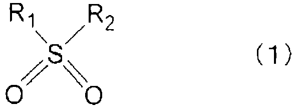 wherein R₁ and R₂ each independently represent an alkyl group having from 1 to 12 carbon atoms, which may be partially substituted by a halogen, an alkoxy group or an aromatic ring, an alkoxy group, or a phenyl group, and **characterised in that** a total number of carbon atoms of R₁ and R₂ is 5 or more.

2. The electrolyte solution for a dye sensitized solar cell according to claim 1, wherein R₁ and R₂ in formula (1) each represent an alkyl group having from 1 to 12 carbon atoms, which may be partially substituted by a halogen, an alkoxy group or an aromatic ring and a total carbon number of the alkyl groups is 5 or more.

3. The electrolyte solution for a dye sensitized solar cell according to claim 1 or 2, wherein the electrolyte solution further comprises, as a redox electrolyte, a halogen compound with a halogen ion as a counter ion, and a halogen molecule.

4. The electrolyte solution for a dye sensitized solar cell according to claim 3, wherein the halogen compound contains an imidazolium cation represented by formula (2): 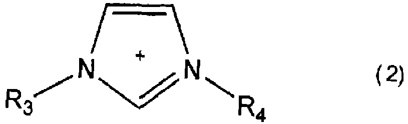 wherein R₃ and R₄ each independently represent an alkyl group or an alkoxyalkyl group, each of which has from 1 to 3 carbon atoms.

5. The electrolyte solution for a dye sensitized solar cell according to claim 4, wherein R₃ and R₄ in formula (2) each represent an alkyl group having from 1 to 3 carbon atoms, and a total carbon number of the alkyl groups is from 2 to 4.

6. The electrolyte solution for a dye sensitized solar cell according to any one of claims 3 to 5, wherein a concentration of the halogen compound is from 0.1 to 4.0 mol/L.

7. The electrolyte solution for a dye sensitized solar cell according to any one of claims 3 to 6, wherein the halogen compound is an iodide salt, and the halogen molecule is iodine.

8. A dye sensitized solar cell comprising the electrolyte solution for a dye sensitized solar cell according to any one of claims 1 to 7.

9. A method for producing a dye sensitized solar cell, comprising: charging and sealing, between a semiconductor electrode and a counter electrode, an electrolyte solution for a dye sensitized solar cell, containing a chain sulfone compound represented by formula (1) as a solvent: 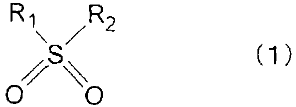 wherein R₁ and R₂ each independently represent an alkyl group having from 1 to 12 carbon atoms, which may be partially substituted by a halogen, an alkoxy group or an aromatic ring, an alkoxy group, or a phenyl group, and **characterised in that** a total number of carbon atoms of R₁ and R₂ is 5 or more.

10. A method for improving a photoelectric conversion efficiency of an electrolyte solution for a dye sensitized solar cell, comprising: adding an imidazolium cation represented by formula (2): 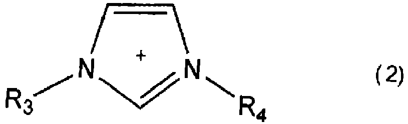 wherein R₃ and R₄ each independently represent an alkyl group or an alkoxyalkyl group, each of which has from 1 to 3 carbon atoms, to a solvent containing a chain sulfone compound represented by formula (1): 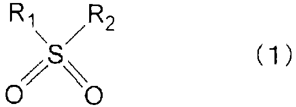 wherein R₁ and R₂ each independently represent an alkyl group having from 1 to 12 carbon atoms, which may be partially substituted by a halogen, an alkoxy group or an aromatic ring, an alkoxy group, or a phenyl group, and **characterised in that** a total number of carbon atoms of R₁ and R₂ is 5 or more.

## Patentansprüche

1. Elektrolytlösung für eine Farbstoff-sensibilisierte Solarzelle, umfassend eine Kette einer Sulfonverbindung der Formel (1) als Lösungsmittel: 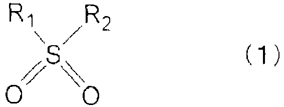 wobei R₁ und R₂ jeweils unabhängig für eine Alkylgruppe mit 1 bis 12 Kohlenstoffatomen, die teilweise mit einem Halogen, einer Alkoxygruppe oder einem aromatischen Ring substituiert sein kann, eine Alkoxygruppe oder eine Phenylgruppe stehen, **dadurch gekennzeichnet, dass** die Gesamtzahl der Kohlenstoffatome von R₁ und R₂ 5 oder mehr beträgt.

2. Die Elektrolytlösung für eine Farbstoff-sensibilisierte Solarzelle nach Anspruch 1, wobei R₁ und R₂ in Formel (1) jeweils für eine Alkylgruppe mit 1 bis 12 Kohlenstoffatomen, die teilweise mit einem Halogen, einer Alkoxygruppe oder einem aromatischen Ring substituiert sein kann, stehen und die Gesamtzahl der Kohlenstoffatome der Alkylgruppen 5 oder mehr beträgt.

3. Die Elektrolytlösung für eine Farbstoff-sensibilisierte Solarzelle nach Anspruch 1 oder 2, wobei die Elektrolytlösung ferner als Redoxelektrolyt eine Halogenverbindung mit einem Halogenion als Gegenion und ein Halogenmolekül umfasst.

4. Die Elektrolytlösung für eine Farbstoff-sensibilisierte Solarzelle nach Anspruch 3, wobei die Halogenverbindung ein Imidazolium-Kation der Formel (2) enthält: 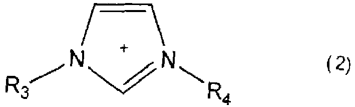 wobei R₃ und R₄ jeweils unabhängig für eine Alkylgruppe oder eine Alkoxyalkylgruppe stehen, welche jeweils von 1 bis 3 Kohlenstoffatome aufweisen.

5. Die Elektrolytlösung für eine Farbstoff-sensibilisierte Solarzelle nach Anspruch 4, wobei R₃ und R₄ in Formel (2) jeweils für eine Alkylgruppe mit 1 bis 3 Kohlenstoffatomen stehen und die Gesamtzahl der Kohlenstoffatome der Alkylgruppen von 2 bis 4 beträgt.

6. Die Elektrolytlösung für eine Farbstoff-sensibilisierte Solarzelle nach einem der Ansprüche 3 bis 5, wobei die Konzentration der Halogenverbindung von 0,1 bis 4,0 mol/l beträgt.

7. Die Elektrolytlösung für eine Farbstoff-sensibilisierte Solarzelle nach einem der Ansprüche 3 bis 6, wobei die Halogenverbindung ein lodsalz ist und das Halogenmolekül lod ist.

8. Farbstoff-sensibilisierte Solarzelle, umfassend die Elektrolytlösung für eine Farbstoff-sensibilisierte Solarzelle nach einem der Ansprüche 1 bis 7.

9. Verfahren zur Herstellung einer Farbstoff-sensibilisierten Solarzelle, umfassend das Einfüllen und Versiegeln, zwischen einer Halbleiterelektrode und einer Gegenelektrode, einer Elektrolytlösung für eine Farbstoff-sensibilisierten Solarzelle, die eine Kette einer Sulfonverbindung der Formel (1) als Lösungsmittel enthält: 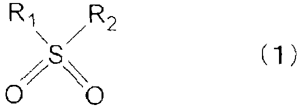 wobei R₁ und R₂ jeweils unabhängig für eine Alkylgruppe mit 1 bis 12 Kohlenstoffatomen, die teilweise mit einem Halogen, einer Alkoxygruppe oder einem aromatischen Ring substituiert sein kann, eine Alkoxygruppe oder eine Phenylgruppe stehen, **dadurch gekennzeichnet, dass** die Gesamtzahl der Kohlenstoffatome von R₁ und R₂ 5 oder mehr beträgt.

10. Verfahren zur Verbesserung des photoelektrischen Umwandlungsgrads einer Elektrolytlösung für eine Farbstoff-sensibilisierten Solarzelle, umfassend das Zugeben eines Imidazolium-Kations der Formel (2): 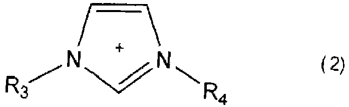 wobei R₃ und R₄ jeweils unabhängig für eine Alkylgruppe oder eine Alkoxyalkylgruppe stehen, welche jeweils von 1 bis 3 Kohlenstoffatome aufweist, zu einem Lösungsmittel, das eine Kette einer Sulfonverbindung der Formel (1) enthält: 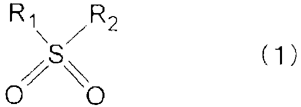 wobei R₁ und R₂ jeweils unabhängig für eine Alkylgruppe mit 1 bis 12 Kohlenstoffatomen, die teilweise mit einem Halogen, einer Alkoxygruppe oder einem aromatischen Ring substituiert sein kann, eine Alkoxygruppe oder eine Phenylgruppe stehen, **dadurch gekennzeichnet, dass** die Gesamtzahl der Kohlenstoffatome von R₁ und R₂ 5 oder mehr beträgt.

## Revendications

1. Solution d'électrolyte pour une photopile à colorant, comprenant un composé sulfone à chaîne représenté par la formule (1) en tant que solvant : 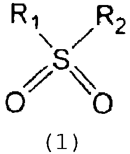 dans laquelle R₁ et R₂ représentent chacun indépendamment un groupe alkyle ayant de 1 à 12 atomes de carbone, qui peut être partiellement substitué par un halogène, un groupe alcoxy ou un cycle aromatique, un groupe alcoxy, ou un groupe phényle, et **caractérisée en ce que** le nombre total d'atomes de carbone de R₁ et R₂ est de 5 ou plus.

2. Solution d'électrolyte pour une photopile à colorant selon la revendication 1, dans laquelle R₁ et R₂ dans la formule (1) représentent chacun un groupe alkyle ayant de 1 à 12 atomes de carbone, qui peut être partiellement substitué par un halogène, un groupe alcoxy ou un cycle aromatique, et le nombre total de carbones des groupes alkyle est de 5 ou plus.

3. Solution d'électrolyte pour une photopile à colorant selon la revendication 1 ou 2, dans laquelle la solution d'électrolyte comprend en outre, en tant qu'électrolyte redox, un composé halogéné avec un ion halogène en tant que contre-ion, et une molécule d'halogène.

4. Solution d'électrolyte pour une photopile à colorant selon la revendication 3, dans laquelle le composé halogéné contient un cation imidazolium représenté par la formule (2) : 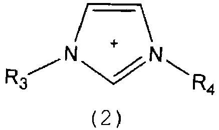 dans laquelle R₃ et R₄ représentent chacun indépendamment un groupe alkyle ou un groupe alcoxyalkyle, dont chacun a de 1 à 3 atomes de carbone.

5. Solution d'électrolyte pour une photopile à colorant selon la revendication 4, dans laquelle R₃ et R₄ dans la formule (2) représentent chacun un groupe alkyle ayant de 1 à 3 atomes de carbone, et le nombre de carbones total des groupes alkyle est de 2 à 4.

6. Solution d'électrolyte pour une photopile à colorant selon l'une quelconque des revendications 3 à 5, dans laquelle la concentration du composé halogéné est de 0,1 à 4,0 mol/l.

7. Solution d'électrolyte pour une photopile à colorant selon l'une quelconque des revendications 3 à 6, dans laquelle le composé halogéné est un sel iodure, et la molécule d'halogène est l'iode.

8. Photopile à colorant comprenant la solution d'électrolyte pour une photopile à colorant selon l'une quelconque des revendications 1 à 7.

9. Procédé pour produire une photopile à colorant, comprenant : le chargement et le scellement, entre une électrode à semi-conducteur et une contre-électrode, d'une solution d'électrolyte pour une photopile à colorant, contenant un composé sulfone à chaîne représenté par la formule (1) en tant que solvant : 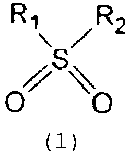 dans lequel R₁ et R₂ représentent chacun indépendamment un groupe alkyle ayant de 1 à 12 atomes de carbone, qui peut être partiellement substitué par un halogène, un groupe alcoxy ou un cycle aromatique, un groupe alcoxy, ou un groupe phényle, et **caractérisé en ce que** le nombre total d'atomes de carbone de R₁ et R₂ est de 5 ou plus.

10. Procédé pour améliorer le rendement de conversion photoélectrique d'une solution d'électrolyte pour une photopile à colorant, comprenant : l'addition d'un cation imidazolium représenté par la formule (2) : 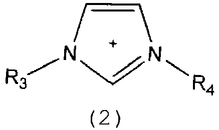 dans lequel R₃ et R₄ représentent chacun indépendamment un groupe alkyle ou un groupe alcoxyalkyle, dont chacun a de 1 à 3 atomes de carbone, à un solvant contenant un composé sulfone à chaîne représenté par la formule (1) : 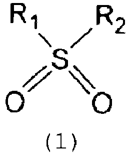 dans lequel R₁ et R₂ représentent chacun indépendamment un groupe alkyle ayant de 1 à 12 atomes de carbone, qui peut être partiellement substitué par un halogène, un groupe alcoxy ou un cycle aromatique, un groupe alcoxy, ou un groupe phényle, et **caractérisé en ce que** le nombre total d'atomes de carbone de R₁ et R₂ est de 5 ou plus.
